# EUROPEAN PATENT APPLICATION

(11) **EP 4 545 943 A1**
(43) Date of publication of application: **30.04.2025**
(21) Application number: 24208447.3
(22) Date of filing: 23.10.2024
(51) Int. Cl.: G01N 17/00, G01N 23/046

(54) **COMPONENT CORROSION PROGNOSTICS USING COMPUTED TOMOGRAPHY (CT)-SCAN AND METHODS**

(30) Priority: 23.10.2023 US 202318492191
(71) Applicant: RTX Corporation, Farmington, CT 06032 (US)
(72) Inventor: CHEN, Lei, Farmington, 06032 (US); KOCH, Robert, Farmington, 06032 (US); FURRER, David U., Farmington, 06032 (US)
(74) Representative: Dehns

(57) **Abstract**

A corrosion analysis assembly including a computed tomography scanner (102, 106) positioned relative to a component (104), the computed tomography scanner (102, 106) configured to non-destructively scan a section (200) of the component (104) to identify corrosion sites and measure spatially resolved characteristic parameters for the corrosion sites to provide a corrosion data set.

## Description

### TECHNICAL FIELD

The present disclosure relates to non-destructive corrosion measurement of components (e.g., heat exchanger assemblies/systems, and the like) and related methods of prognostics of the remaining life of the components limited by corrosion attacks and, more particularly, to systems and methods to determine corrosion severity of a section (e.g., small section) of a component corrosion (e.g., heat exchanger corrosion) using computed tomography (CT) scans for a time interval and subsequent statistical analysis to derive the probability of failure in future service.

### BACKGROUND

In general, components that are exposed to the atmosphere suffer corrosion over time. For example, heat exchangers (HEX) are used for temperature control in a variety of systems as well as for providing human comfort. Air/liquid heat exchangers rely on ambient air to eject or absorb heat to or from the ambient environment, hence they may adsorb airborne corrosive chemicals. These heat exchangers may suffer from corrosion due to this exposure to airborne chemicals as well as due to exposure to periodic wet conditions.

If corrosion is not contained, it can expand over time and cause perforation of the thin walls of the heat exchanger repeating units resulting in subsequent leak failure thereby posing a safety risk or operational challenges. A plate air/liquid heat exchanger comprises flat tube sheets and air fins closely packaged to maximize heat transfer efficiency for light weight and compact size. Construction of the heat exchangers can make visual inspection of corrosion effectively impossible.

Furthermore, severity (depth) of localized corrosion attacks that propagate in the plate walls generally cannot be determined by visual inspection. Removing the components to conduct pressure tests can be one way of managing imminent leak risks; however, this method alone does not provide one with an estimate of the remaining life of the heat exchanger.

A need remains for non-destructive testing methods to evaluate and estimate remaining life of components such as heat exchangers.

### SUMMARY

The present invention provides a corrosion analysis assembly which includes a computed tomography scanner positioned relative to a component. The computed tomography scanner is configured to non-destructively scan a section of the component to identify corrosion sites and measure spatially resolved characteristic parameters for the corrosion sites to provide a corrosion data set.

In an embodiment of the above, the component of the assembly includes a metallic or a metal component.

In a further embodiment of any of the above, the component is positioned on an aircraft and the component comprises at least one of aluminum, titanium, steel or nickel.

In a further embodiment of any of the above, the component is an intact unit, a partially intact unit, or a mock unit.

In a further embodiment of any of the above, the computed tomography scanner is a micro-computed tomography scanner.

In a further embodiment of any of the above, the computed tomography scanner is configured to measure a wall thickness at each corrosion site with accuracy of about 0.001 inches (0.0254 mm).

The present disclosure also provides a method for non-destructively determining component life or probability of failure which includes positioning a computed tomography scanner relative to a component, scanning a section of the component via the computed tomography scanner to identify corrosion sites and to measure one or more spatially resolved characteristic parameters for the corrosion sites to provide a first corrosion data set, selecting a first subset of the first corrosion data set; and performing an analysis on the first subset of the first corrosion data set.

In an embodiment of the above, the computed tomography scanner only scans a section of the component to identify corrosion sites and measure one or more spatially resolved characteristic parameters for the corrosion sites.

In a further embodiment of any of the above, the computed tomography scanner is configured to scan a plurality of zones of the section of the component to identify corrosion sites and measure one or more spatially resolved characteristic parameters for the corrosion sites, each zone of the plurality of zones having equal areas.

In a further embodiment of any of the above, the computed tomography scanner is configured to measure a wall thickness at each corrosion site with accuracy to about 0.001 inches (0.0254 mm).

In a further embodiment of any of the above, the analysis includes modeling the probability of failure of the component and/or estimating the remaining life of the component.

In a further embodiment of any of the above, to measure one or more spatially resolved characteristic parameters for the corrosion sites includes measuring the depth of each identified corrosion site, wherein the depth of each identified corrosion site is determined by its orientation towards a plane; where the plane determines perforation under pressure.

In a further embodiment of any of the above, to measure one or more spatially resolved characteristic parameters for the corrosion sites includes measuring the remaining wall thickness at each identified corrosion site.

In a further embodiment of any of the above, the scanning provides a three-dimensional volume image as the first corrosion data set. The selecting of a first subset of the first corrosion data set includes virtually positioning the three-dimensional volume image into zones with equal surface areas to provide sampling areas. A most severe corrosion site within each sampling area is selected to provide a subset of the most severe corrosion sites within the three-dimensional volume image. The subset of the most severe corrosion sites is the first subset of the first corrosion data set, and the first subset of the first corrosion data set is analyzed with extreme value statistics.

In a further embodiment of any of the above, the analysis on the first subset of the first corrosion data set is performed with a mechanistic model, a statistical model, a machine-learning model, or a combination thereof.

The present invention also provides a method for non-destructive testing and measurement of corrosion sites on a component which includes supplying a component, wherein the component is corroded with a plurality of corrosion sites, performing a first scan of the component. The first scan includes imaging a portion of the component non-destructively and measuring one or more spatially resolved characteristic parameters for the corrosion sites to provide a first corrosion data set. The method includes selecting a first subset of the first corrosion data set corresponding to a subset of the corrosion sites, and performing an analysis on the first subset of the first corrosion data set. The method includes exposing the component to corrosive conditions to provide a re-exposed component and performing an additional scan of the re-exposed component. The additional scan includes imaging a portion of the re-exposed component non-destructively and measuring one or more spatially resolved characteristic parameters of the corrosion sites for the subset of corrosion sites to provide a second corrosion data set. The method includes performing an analysis on the second corrosion data set.

In an embodiment of the above, the component is re-exposed to corrosive conditions for n additional scans of the component and generating n corrosion data sets for n sets of spatially resolved characteristic parameters for the corrosion sites, where n is an integer.

In a further embodiment of any of the above, the component is exposed to corrosive conditions and an additional scan of the component is performed for up to 100 additional scans.

In a further embodiment of any of the above, the corrosive conditions comprise conditions of use.

### BRIEF DESCRIPTION OF THE FIGURES

FIG. 1A is a schematic diagram of a computerized x-ray imaging system that comprises an x-ray source and an x-ray detector disposed on opposing sides of an object of interest that is to be examined for corrosion;
FIG. 1B is a schematic diagram of a computed tomography system (CT);
FIG. 2 is a schematic side view of an air/liquid heat exchanger of the FIG. 1B;
FIG. 3 is an expanded view of a portion of the air/liquid heat exchanger of the FIG. 2;
FIG. 4 is a process diagram that depicts one manner of non-destructively examining the heat exchanger;
FIG. 5 depicts an exemplary method of non-destructively examining the heat exchanger;
FIG. 6 depicts another exemplary method of non-destructively examining the heat exchanger;
FIG. 7A is a graph that depicts the relationship between a probability density function and the normalized deepest corrosion attacks in a sampled area; and
FIG. 7B is a graph that depicts the probability of failure as a function of time.

### DETAILED DESCRIPTION

The exemplary embodiments disclosed herein are illustrative of corrosion damage evaluation of a component (e.g., heat exchanger for aircraft or the like), and systems of the present disclosure and methods/techniques thereof. It should be understood, however, that the disclosed embodiments are merely examples of the present disclosure, which may be embodied in various forms. Therefore, details disclosed herein with reference to example component detection assemblies and associated processes/techniques of fabrication/assembly and use are not to be interpreted as limiting, but merely as the basis for teaching one skilled in the art how to make and use the systems/assemblies and/or alternative systems/assemblies of the present disclosure.

"Non-destructive testing" and a "non-destructive technique," as used herein, refer to non-damaging processes, where the same surface and surface features can be examined and re-examined over extended periods of time.

The present disclosure provides for non-destructive corrosion measurement of components (e.g., heat exchanger assemblies/systems, and the like) and related methods of prognostics of the remaining life of the components limited by corrosion attacks. More particularly, the present disclosure provides for systems and methods to determine corrosion severity of a section of a component (e.g., heat exchanger corrosion) using computed tomography (CT) scans for a time interval and subsequent statistical analysis to derive the probability of failure during the life-time of the component. The computed tomography scans may be used to generate a predictive model that provides estimates of the rate of corrosion as well as the length of time that the component can continue in service.

In an embodiment, the system and the methods disclosed herein provide for the detection (CT detection) and analysis (statistical modeling) of the complex, stochastic issue of corrosion pitting in a component (e.g., any metallic component, such as, for example, a heat exchanger), and then the system compiles/mines this data to generate analytics that enable corrosion predictive capabilities.

The systems and methods facilitate conducting a very detailed CT analysis on components/materials and parts to generate high quantity, rich data about corrosion rates of many pits of the component/material. This enables accurate probabilistic computational models to guide field use and removal from the field for the components, materials and/or parts.

In an embodiment, a method for detecting and estimating component (e.g., heat exchanger) life or failure by scanning a portion of the heat exchanger with associated image analysis of 3D images and related statistical parameters over a period of time. In an embodiment, the method and system disclosed herein obviate the need to scan the entire heat exchanger for studying corrosion. The heat exchanger may be oriented and reoriented minimally during imaging via CT scanning to determine the effects of corrosion. The system and the methods disclosed herein also facilitate an evaluation of heat exchangers to estimate the remaining life span so as to assure reliable operation of the system.

The present disclosure provides for corrosion damage evaluation of a heat exchanger assembly and related methods of prognostics and use. A brazed aluminium plate-fin heat exchanger (BAHX) comprises a block or core with flow passages separated by flat plates known as parting sheets. The edges of the flow passages are sealed by side bars. These will be discussed in detail later. Specifically, and in certain embodiments, localized corrosion of heat exchanger parting sheets can be most detrimental to the reliable operation of the heat exchanger as the corrosion is not visible for inspection and it can grow undetectable in a self-catalytic way to weaken the strength of the wall leading to perforation of the parting sheets. More particularly and in certain embodiments, the present disclosure provides for component (e.g., aluminum heat exchanger) a corrosion detection system that using computed tomography (CT) scans to enable remaining life estimate of the component (e.g., heat exchanger) due to corrosion damages.

The systems and methods of the present disclosure can utilize full parts (e.g., heat exchangers) or representative samples and component sub-elements that can be exposed to normal field or accelerated field environments. This can be a sample selection and exposure technology. In exemplary embodiments, an important aspect of the present disclosure is that one to 1,000-plus pits in a single sample can be imaged by CT detection and the sample can be re-exposed, re-characterized by CT detection to gain specific pit growth information on specific individual pits since the CT process can recognize the same pits from the first to the nth-exposure. The systems and methods of the present disclosure can generate large quantities of high quality pit growth data. This data can then be used to create computational models on pit nucleation and growth.

In an embodiment, the system and the methods disclosed herein provide for the detection (CT detection) and analysis (statistical modeling) of the complex, stochastic issue of corrosion pitting in a component (e.g., any metallic component, such as, for example, a heat exchanger), and then the system compiles/mines this data to generate analytics that enable corrosion predictive capabilities.

The systems and methods facilitate conducting a very detailed CT analysis on components/materials and parts to generate high quantity, rich data about corrosion rates of many pits of the component/material. This enables accurate probabilistic computational models to guide field use and removal from the field for the components, materials and/or parts.

In an embodiment, a method for detecting and estimating component (e.g., heat exchanger) life or failure by scanning a portion of the heat exchanger with associated image analysis of 3D images and related statistical parameters over a period of time. In an embodiment, the method and system disclosed herein obviate the need to scan the entire heat exchanger for studying corrosion. The heat exchanger may be oriented and reoriented minimally during imaging via CT scanning to determine the effects of corrosion. The system and the methods disclosed herein also facilitate an evaluation of heat exchangers to estimate the remaining life span so as to assure reliable operation of the system.

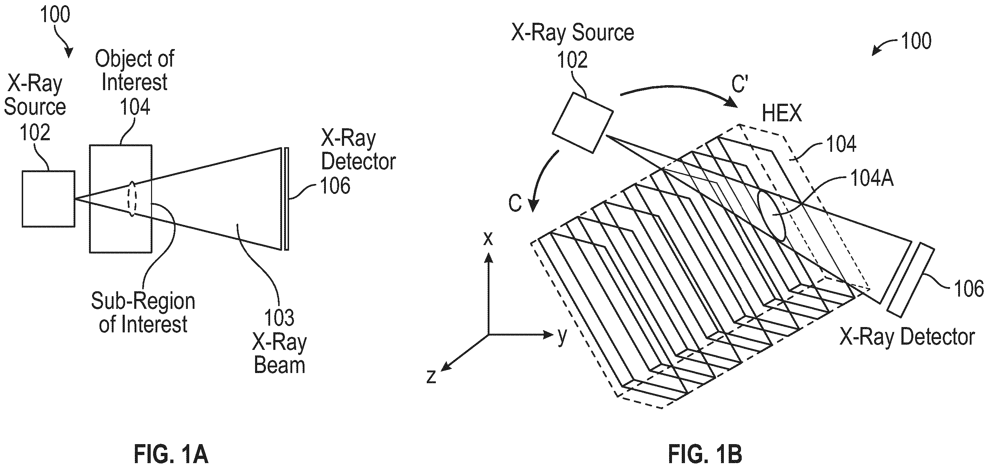

With reference to FIG. 1A and 1B, a computerized x-ray imaging system 100 comprises an x-ray source 102 and an x-ray detector 106 disposed on opposing sides of an object of interest that is to be investigated for the progression of corrosion. In an embodiment, the object of interest is a heat exchanger 104. A beam of x-rays 103 emanating from the x-ray source 102 is incident upon a portion of the heat exchanger 104. The x-ray beam undergoes scattering by the portions of the heat exchanger upon which it is incident and the scattered x-rays are collected by the x-ray detector 106. FIG. 1B is an exemplary schematic depiction of a "computed tomography system" (CT) which refers to a computerized x-ray imaging procedure in which a narrow beam of x-rays 103 (produced by x-ray source 102) are incident upon the heat exchanger 104 at an area 104A and rotated (along C-C') around the body, producing signals that are detected by x-ray detector 106 and processed by the system's computer (not shown) to generate cross-sectional images, or "slices." These slices are called tomographic images and provide more detailed information than conventional x-rays. Once a number of successive slices are collected by the machine's computer, they can be digitally "stacked" together to form a three-dimensional (3D) image of the heat exchanger area 104A that allows for easier identification of basic structures as well as possible corrosion.

FIG. 1B illustrates an orientation of a heat exchanger 104 positioned relative to a CT scanner such that the field of view contains at least part of one section of the component (e.g., one parting sheet of a heat exchanger 104). In some embodiments, after scanning is complete, the CT scan data/images can be portioned/partitioned into equal areas to facilitate the identification of the most severe corrosion sites in each area.

The corrosion analysis assembly and the method of non-destructively examining and re-examining the component can include computer aided tomography (hereinafter computer tomography or CT). The term "computed tomography," or CT, refers to a computerized x-ray imaging procedure where a collection of angle-resolved x-ray radiographic projections of the heat exchanger 104 and subsequent computer-based transformation/back-projection of the lower dimensional x-ray radiographic projections to higher dimensions. In some embodiments, during a CT scan the narrow beam of x-rays is aimed at the component and rotated around the component, producing signals that are processed by the machine's computer to generate cross-sectional images, or "slices." In other embodiments, the component can be rotated while the x-ray source is held stationary to generate the cross-sectional images. These slices are called tomographic images and can provide more detailed information than conventional x-rays. Depending on the x-ray detector used, the x-ray radiographic projections can be one-dimensional or two-dimensional signals, and the backprojection transforms the x-ray radiographic projections to two-dimensional slices or three-dimensional slices, respectively. Once a number of successive slices are collected by the machine's computer, they can be digitally "stacked" together to form a three-dimensional (3D) volume image of the component that allows for easier identification of basic structures as well as internal features of the component.

Unlike a conventional x-ray-which uses a fixed x-ray tube-a CT scanner can use a motorized x-ray source that rotates around a component or can use a static x-ray source while the component is rotated. During a CT scan, the component is orientated respective to the CT scanner and the CT scanner and/or the component moves while the x-ray tube shoots narrow beams of x-rays through the bulk of the component. Instead of film, CT scanners can use special digital x-ray detectors, which are located directly opposite the x-ray source. As the x-rays leave the component, they can be picked up by the detectors and transmitted to a computer.

Each time the x-ray source completes a rotation around the component, the CT computer uses sophisticated mathematical techniques to construct a two-dimensional or three-dimensional image slice of the component. The thickness of the component represented in each image slice can vary depending on the CT machine used, but usually ranges from 1-10 millimeters. When a full slice is completed, the image is stored. In some embodiments, the x-ray scanning process is repeated to produce another image slice. This process continues until the desired number of slices is collected.

Image slices can either be displayed individually in two or three dimensions. In some embodiments, multiple slices can be stacked together by the computer to generate a 3D image of the component that shows the microstructure of the component as well as any abnormalities (such as pits, nucleation sites, or the like, that the technician is trying to identify). This method has many advantages including the ability to rotate the 3D image in space or to view slices in succession, making it easier to find the exact place where a problem may be located.

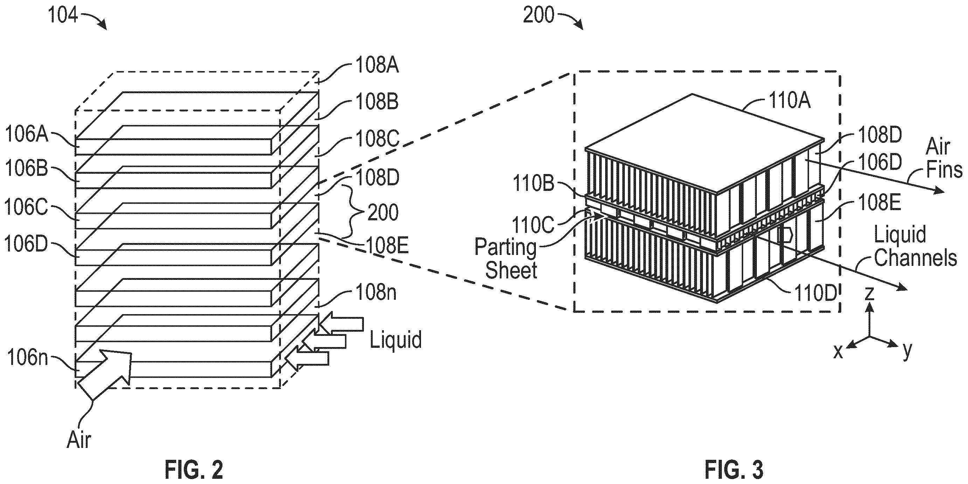

FIG. 2 is a schematic side view of an air/liquid heat exchanger 104 of the FIG. 1B. The heat exchanger 104 comprises a plurality of liquid channels 106A, 106B, 106C, 106D,...,106n, and so on. A liquid is transported through the liquid channels. Interposed with the liquid channels are air fins 108A, 108B, 108C, 108D,... .,108n, and so on. In an embodiment, the air fins carry away heat that is contained in the liquid. In other words, heat is transferred from the liquid in the liquid channels to the air that travels around the air fins or vice versa. In an exemplary embodiment, heat is transferred from the liquid in the liquid channels to the air that travels around the air fins. Each liquid channel is surrounded by a pair of air fins and each set of air fins is surrounded by a pair of liquid channels. In an embodiment, a parting sheet separates the liquid channel from a set of air fins. This is shown and detailed in the FIG. 3 below.

FIG. 3 is an expanded view of a portion 200 of the heat exchanger 104. The FIG. 3 depicts two sets of air fins 108D and 108E that are disposed on either side of the liquid channel 106D. Each set of air fins is separated from the liquid channel by a parting sheet. For example, a pair of parting sheets 110A and 110B are disposed on opposing surfaces of the air fin 108D, while another pair of parting sheets 110C and 110D are disposed on opposing surfaces of the air fin 108E. The liquid channel 106D is disposed between the parting sheets 110B and 110C. In other words, a first pair of parting sheets are disposed on opposing surfaces of a set of air fins, while a second pair of parting sheets are disposed on opposing surfaces of each liquid channel. One parting sheet is typically shared between the first pair of parting sheets and the second pair of parting sheets.

With reference now to the FIGS. 1A, 1B, 2 and 3, micro-computed tomography (micro-CT) scans from a CT scanner are used to measure spatially resolved characteristic parameters for the corrosion sites on a portion 104A of the heat exchanger 104. By irradiating a plurality of small sampling areas (e.g., 104A on the heat exchanger 104) per scan, and rotating the xray source 102 and the xray detector 106 around the heat exchanger (which is typically retained in a static position, while the xray source and xray detector are moved), scans of significant portions of the heat exchanger may be conducted. These scans are used to estimate the remaining life of the entire heat exchanger 104.

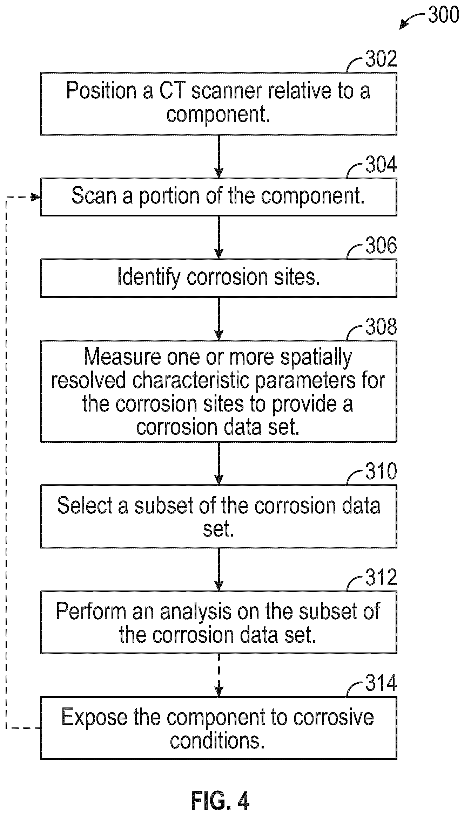

FIG. 4 depicts one manner of performing a non-destructive test micro-computed tomography (micro-CT) scans from a CT scanner to develop a model for corrosion for a particular air/liquid heat exchanger. The method 300 comprises a plurality of steps that are detailed below. The method 300 can be initiated with step 302, which comprises positioning a CT scanner relative to a component. In this case, the component can be a heat exchanger 104 as seen in the FIGS. 1A and 1B. Next in step 304, a portion of the heat exchanger (see area 104A in the FIG. 1B) is scanned using the x-ray source 102 and the x-ray detector 106. In step 306, the corrosion sites are identified in the scanned area. In step 308, one or more spatially resolved characteristic parameters for the corrosion sites are measured to provide a corrosion data set. In step 310, a subset of the corrosion data set is selected for further analysis. Spatially resolved characteristic parameters of the corrosion sites of the subset of the corrosion sites are analyzed in step 312. In some embodiments, the component can be further exposed to corrosive conditions to provide a re-exposed component and the process 300 can be repeated. After a certain time period of exposure to corrosive conditions (step 314), the re-exposed component can be re-subjected to steps 304 to 312.

In step 308, the spatially resolved characteristic parameters can include the directional depth of a corrosion attack, depth to a normal plane of interest, and volume of the corroded area. A non-corroded component can be scanned by a non-destructive technique to provide an initial normal plan of interest, surface variation, and so forth of the component in the absence of any corrosion sites.

The spatially resolved corrosion sites measured can include physical parameters of the directional depth of corrosion attacks, depth to a normal plane of interest, and volume of the corroded area. In some embodiments, the depth of the spatially resolved corrosion sites within a three-dimensional volume image are measured with a resolution of about 0.001 inches (about 25.4 micrometers), of about 20 micrometers, of about 15 micrometers. In some embodiments, the remaining wall thickness of each corrosion site of interest in the spatially resolved corrosion sites within the three-dimensional volume image are measured to an accuracy of about +/- 0.001 inches (about 25.4 micrometers), of about 20 micrometers, of about 15 micrometers. In some embodiments, the spatially resolved corrosion sites within the three-dimensional volume image are identified corrosion sites and the depth of each corrosion site is identified. In further embodiments, the depth of each corrosion site is determined by its orientation towards a plane that determines perforation under pressure. In this manner, the remaining wall thickness is analyzed to derive the probability of failure due to perforation under pressure.

In an embodiment, the method may be performed on a first component (a first portion of the heat exchanger) and this first portion of the heat exchanger can be exposed to corrosive conditions and then the spatially resolved corrosion sites can be measured non-destructively in repeated iterations. After the collection of the dataset, the data may undergo further analysis to select a subset of the data for modeling and performing the modeling to provide a probability of failure for the first portion of the heat exchanger based on the subset of the corrosion data set.

In some embodiments, the method can further comprise testing of a second portion of the heat exchanger under the same or different corrosive conditions to provide another dataset. In another embodiment, the method can further comprise testing of a second portion of the heat exchanger, with a different component material type than the component material type of the first portion of the heat exchanger, to provide another dataset. The dataset for the first portion of the heat exchanger and the dataset(s) for the second portion of the heat exchanger can be compared to relate corrosion parameters and parameters of the corrosive conditions and/or parameters of the component material type. In other embodiments, datasets may be collected on multiple components under varied corrosive conditions and/or component material types.

In an embodiment, a single component (a first portion of the heat exchanger) may be subjected to a first set of corrosive conditions and then examined and re-examined over uniform or non-uniform intervals of time (using the same first set of corrosive conditions) using one or more non-destructive tests to determine the progressive effects of corrosion. After each examination, the same portion of the heat exchanger is re-exposed to the same first set of corrosive conditions to provide a re-exposed component. The first set of corrosive conditions can involve the use of defined corrosion attack parameters that the heat exchanger may be exposed to during its life cycle. The exposure to the first set of corrosive conditions generally induces multiple corrosion sites. The time of exposure to the first set of corrosive conditions is measured.

In an embodiment, one or more spatially resolved characteristic parameters for the multiple corrosion sites is measured to provide a first corrosion data set. The measurement typically is conducted via one or more non-destructive techniques. The probability of failure is generally modeled from the first corrosion data set to provide a first model. In an embodiment, a subset of the corrosion data set that corresponds to a subset of the corrosion sites is selected, examined and used for modeling. Models of the probability of failure may be generated from the selected subset of the first corrosion data set. Data subsets from any of the exposures of any of the component may thus be used to generate probability models for failure or correct existing models.

Multiple measurements such as, for example, a second measurement, a third measurement, and so on, up to "n" measurements may be made on the first component, resulting in the collection of second, third, and so on, up to "n" data sets. For each exposure, a set of spatially resolved characteristic parameters of the corrosion sites is measured. For example, a first exposure to a first set of corrosive conditions results in a first set of spatially resolved characteristic parameters of the corrosion sites being measured to generate a first corrosion data set, while a second exposure (at a later time) of the first component to the same first set of corrosive conditions results in a second set of spatially resolved characteristic parameters of the corrosion sites being measured to generate a second corrosion data set. The model arrived from the first corrosion data set may be tested against the results obtained for each subsequent measurement. The model may be corrected based on the collected "n" corrosion data sets obtained from the "n" different measurements on a single component under the same environmental conditions, thus providing for a statistical data-driven and data-tested, accurate predictive model. The number "n" above in each instance is an integer. For example, n can be 1, 2, 3, 4, and so on. In an embodiment, n can be greater than or equal to 10, greater than or equal to 20, greater than or equal to 30, greater than or equal to 100, greater than or equal to 1000, and so on.

In another embodiment, more than one portion of the heat exchanger (e.g., a second portion of the heat exchanger, a third portion of the heat exchanger, and so on, up to "n" portions of the heat exchanger) of the same material composition may be tested under "m" different conditions. For example, n and m can independently be 1, 2, 3, 4, and so on. The n and m may be the same or different from one another. In an embodiment, n and m can independently be any integer up to 10, any integer up to 20, any integer up to 30, any integer up to 100, and so on. For example, a second portion of the heat exchanger may be tested under the same conditions as the first portion of the heat exchanger or may be tested under a second set of conditions. Models may be generated for each set of conditions. For example, when "n" different component each having the same composition are tested under the same conditions as those to which the first portion of the heat exchanger is exposed to, the respective models generated may be correlated with the first model (detailed above). Alternatively, the first model may be corrected using the data generated from the "n" different components.

In another embodiment, when "n" different portion of the heat exchanger are exposed to "m" different sets of corrosive conditions, a plurality of different models may be obtained for each of the different portion of the heat exchanger under each of the different conditions. These different models may be aggregated to provide an "envelope" model that provides predictive capabilities for the life cycle of each different component under different conditions. Mathematical algorithms derived from the model may provide predictive information as to how certain component compositions would behave under certain environmental conditions. The composition of the heat exchanger may be varied based on the results obtained. Alternatively, different materials may be selected for use in different conditions based on the predictions of the model.

The models may provide predictive capabilities for generating "new" heat exchangers with different compositions. In other words, the composition of an article may be changed to combat certain harsh environmental conditions based on the predictive capabilities of the model. Alternatively, new surface coatings such as thermal barrier coatings may be designed or used to cover component surfaces that are aggressively attacked under certain environmental conditions. The thicknesses, dimensions, geometry of certain components in the heat exchanger may be changed in response to the data analysis. The described corrosion modeling method provides a non-destructive testing and measurement process to evaluate corrosion attacks. In comparison to destructive testing methods, the non-destructive corrosion modeling method is a more time- and cost-effective process that provides improved modeling accuracy. The method can provide large, accurate datasets, which are material, geometry, and environment specific. Data collected is both time and spatially resolved. The models provide increased accuracy and predictability of the life of engineered components subjected to corrosive conditions of use.

Corrosion can be induced on a heat exchanger (or portions of the heat exchanger) by exposing the heat exchanger to corrosive conditions. The exposure to the corrosive conditions induces multiple instances of corrosion attacks. The conditions of the corrosive conditions can range widely. In an embodiment, the corrosive conditions are tailored to replicate anticipated real-world conditions for a component. In another embodiment, the corrosive conditions are the real-world use of a component. The corrosive conditions can be static or varied. Examples of corrosive conditions properties include acidity, humidity, acid type, temperature, electrolyte concentration, electrolyte chemistry (e.g., salt type, mixtures), and combinations thereof. In some embodiments, the corrosive conditions can be changed from a first portion of the heat exchanger to a second portion of the heat exchanger. Examples of changed corrosive conditions include a change in acid concentration, a change in humidity, a change in acid type, a change in temperature, a change in electrolyte concentration, a change in electrolyte chemistry, and so forth.

The types of corrosion attacks for the corrosion sites to be measured can be associated with corrosion driven failure modes. Examples of failure modes include general corrosion, pitting, crevice corrosion, stress corrosion cracking, corrosion fatigue, fretting, erosion corrosion, inter-granular corrosion, and combinations thereof. The method facilitates the examination and selection of a subset of corrosion sites to assess for probability of failure. In some embodiments, the subset of corrosion sites can be monitored over time as the component is exposed to corrosive conditions. For example, during conditions of use, the component can be periodically scanned and analyzed with method to provide modeling of corrosion progression.

In summary, after exposure of the heat exchanger (or a portion of a heat exchanger) to corrosive conditions, a non-destructive technique (such as for example a CT scan) can be used to measure the spatially resolved parameters. The non-destructive technique enables a more accurate and effective corrosion modeling method than destructive techniques for corrosion measurement. For example, destructive techniques can entail exposing a heat exchanger (or a part of a heat exchanger) to corrosive conditions and then evaluating the occurrence corrosion attacks via sample cross-sectioning and/or sample polishing and metallographic review. These destructive evaluations impede the study of corrosion growth and typically utilize excess samples in comparison to the non-destructive technique described herein. In addition, the non-destructive technique permits rapid compilation of large datasets and is more efficient because it does not involve costly and time-consuming sample preparation and sampling of destructive techniques.

In some embodiments, after the spatially resolved parameters are measured on a corroded component, the corroded component can be re-exposed to the corrosive conditions to progress the corrosion growth to provide a "re-exposed, corroded component" or a "re-exposed component." Subsequently, the spatially resolved parameters for the re-exposed, corroded component can be measured and compared to the initial corrosion data set. The re-exposure of the component to corrosive conditions can be repeated as desired to provide a more accurate reflection of the progression of corrosion.

After compilation of the corrosion data sets from measurement of the spatially resolved parameters, the population of corrosion sites can be analyzed to model the formation of localized corrosion, such as pitting and pit growth as a function of material type and environmental conditions. Multiple factors are taken into consideration during the modeling of the corrosion including corrosion rate behavior.

The method is applicable to several corrosion modeling aspects. For example, corrosion kinetics can be determined via performance of parametric tests on similar materials of construction of a component, and exposing the mock units to periodical micro-CT. Other applications of the method include determination of corrosion growth kinetics for the stochastic process of pit or other type of localized corrosion formation and developing probabilistic growth models for localized corrosion as a function of material type and environmental exposure conditions.

Kinetics of individual corrosion attacks are influenced by factors such as manufacturing history, defects, environmental variability, and the like. Therefore, examining a population of corrosion attacks, specifically a sub-population of all attacks, facilitates estimation of the corrosion rate. For example, in some embodiments, the most severe corrosion attack sites within the sample set of the corrosion data set are selected to provide a subset of the corrosion attack sites, and the subset of the most severe corrosion attack sites can be analyzed with extreme value statistics.

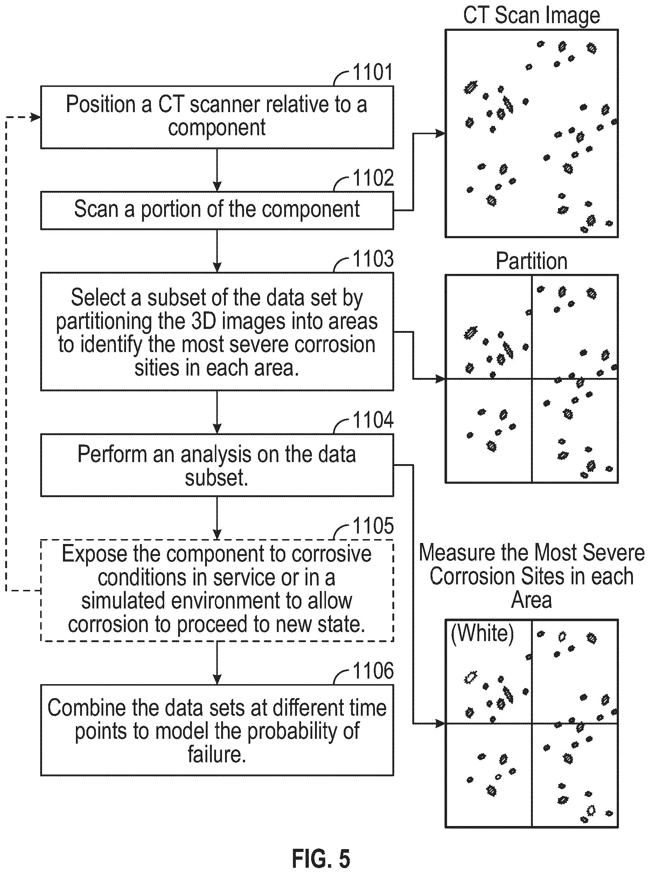

An exemplary method is provided in FIG. 5. As shown in FIG. 5, after positioning of the component (step 1101), scanning of a portion of the component (step 1102), the subset of the data set can be partitioned into areas to facilitate the identification of the most severe corrosion sites in each area (step 1103). That is, accurate measurement of only a down-selected population is used to improve the efficiency and practicality of the method. Specifically, the operator can further manipulate each targeted area/section with an initial qualitative filtering process to isolate sub-group of attacks before determining the attack depth by manipulating the CT-scan image to ensure the corrosion attack penetration is normal to the plane of visualization (analysis of the data set, step 1104). In step 1104, the method can facilitate the determination of the cross-plane corrosion attack depth of the locations identified based on proper orientation of the 3D images and density difference between parent metal and corrosion product. In Step 1104, the system/method obtains the most severe attacks to be analyzed with extreme value statistics.

If desired, the component can be exposed to corrosive conditions in service or in a simulated environment to allow corrosion to proceed to a new state (step 1105). The re-exposed component can then be resubjected to steps 1101 to 1104. After generation of an additional data subset for the re-exposed component, the data subsets can be combined to model the probability of component failure (step 1106). As such, FIG. 5 illustrates an exemplary method for using micro-CT scans to generate localized corrosion data for estimating component remaining life.

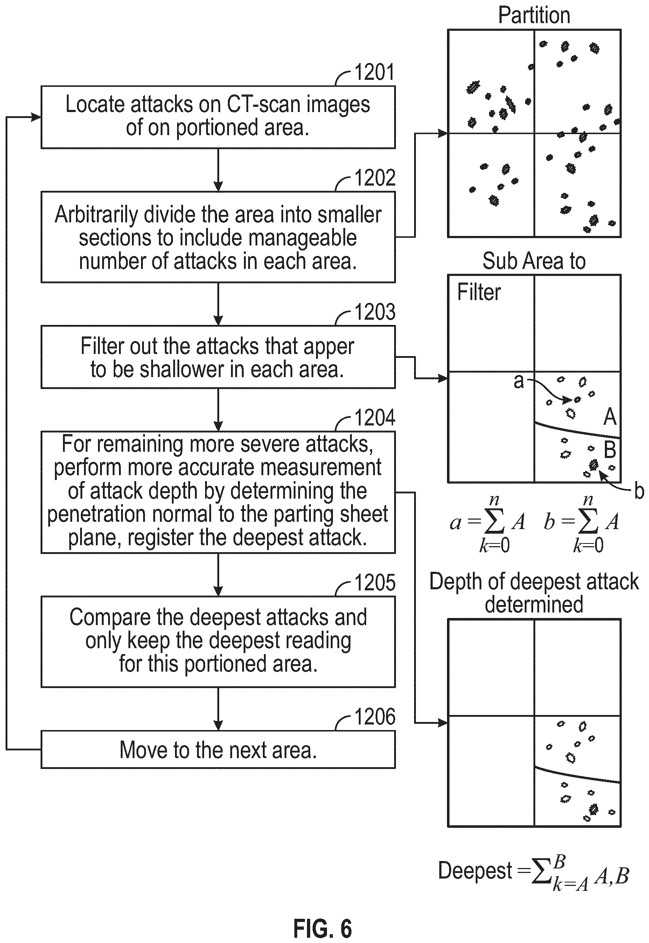

An exemplary method is illustrated in FIG. 6. FIG. 6 depicts an exemplary step 1103 to efficiently determine the most severe corrosion attacks in a portioned area of a section (e.g., a parting sheet of a heat exchanger) of CT-scan images.

In Step 1201, the system locates attacks on CT-scan images of a portioned area. In Step 1202, the system arbitrarily divides the area into smaller sections to include a manageable number of corrosion sites in each area. In Step 1203, the system filters out the corrosion sites that appear to be shallower in each area. In Step 1204, for the remaining more severe corrosion sites, the system performs a more accurate measurement of corrosion site depth by determining the penetration normal to the section plane (e.g., a plan of a parting sheet a heat exchanger), and registers the deepest corrosion sites. In Step 1205, the system compares the deepest corrosion sites and only keeps the deepest readings for this portioned area. In Step 1206, the system moves to the next area to be evaluated.

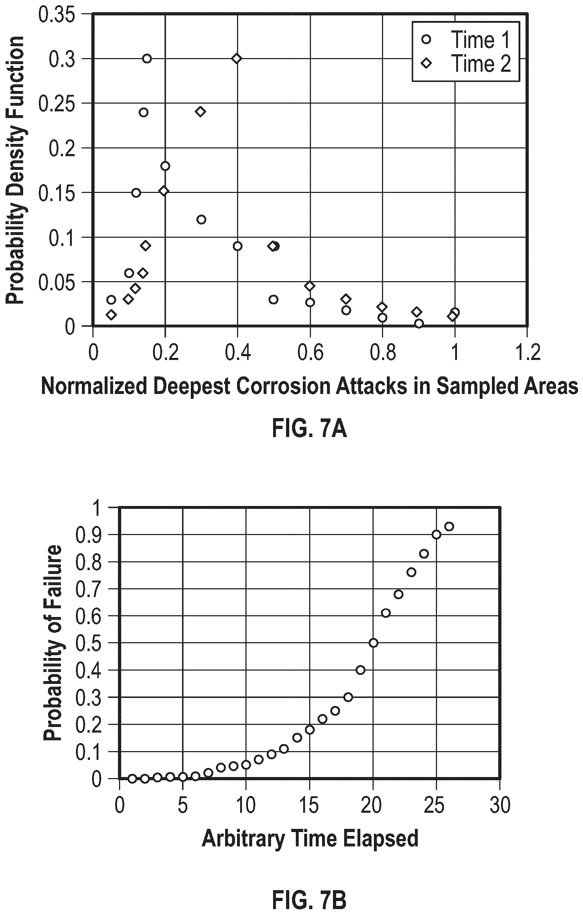

In FIG. 7A, the relationship between the probability density function and the normalized deepest corrosion attacks in a sampled area is graphically depicted for two separate time points using extreme value statistics. As shown in FIG. 7B, over time, the probability of failure of the component increases. The data collected with the disclosed method can allow estimation of a component's probability of failure and remaining lifespan..

It is noted that the assemblies, systems and methods of the present disclosure can enable corrosion prognostics of components to allow for extended service and minimal risks (e.g., extended service and minimal risks of inflight shutdown due to heat exchanger leaks). The method can be particularly effective for aluminum heat exchangers due to the lower density of aluminum and aluminum corrosion products, which can improve the accuracy and efficiency of CT measurement.

There are many benefits of the assemblies, systems and methods of the present disclosure, including, without limitation, the ability to rapidly generate large datasets to enable mechanistic, statistical, or machine-learning models, or a combination thereof to predict the formation of localized corrosion such as pitting and pit growth as a function of material type and environmental conditions - conventional practice was to expose parts or material and then destructively evaluate the occurrence of pits and pit depths via cross-sectioning, polishing and metallographic review - and prior method limited the number of pit samples that could be identified - and prior method could not provide exact pit growth information from the exposure of the same pit to multiple corrosion environment cycles; and/or the assemblies, systems and methods 10, 100 of the present disclosure can be used for a wide range of materials and environments to establish statistics and associated corrosion models, including aluminum, titanium, steel, nickel, and the like.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

The ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," and so forth). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof' is open and includes any combination comprising at least one of the listed components or properties optionally together with a like or equivalent component or property not listed.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Although the assemblies, systems and methods of the present disclosure have been described with reference to example embodiments thereof, the present disclosure is not limited to such example embodiments and/or implementations. Rather, the assemblies, systems and methods of the present disclosure are susceptible to many implementations and applications, as will be readily apparent to persons skilled in the art from the disclosure hereof. The present disclosure expressly encompasses such modifications, enhancements and/or variations of the disclosed embodiments. Since many changes could be made in the above construction and many widely different embodiments of this disclosure could be made without departing from the scope thereof, it is intended that all matter contained in the drawings and specification shall be interpreted as illustrative and not in a limiting sense. Additional modifications, changes, and substitutions are intended in the foregoing disclosure. Accordingly, it is appropriate that the appended claims be construed broadly and in a manner consistent with the scope of the disclosure.

## Claims

1. A corrosion analysis assembly comprising a computed tomography scanner (102, 106) positioned relative to a component (104), the computed tomography scanner (102, 106) configured to non-destructively scan a section (200) of the component (104) to identify corrosion sites and measure spatially resolved characteristic parameters for the corrosion sites to provide a corrosion data set.

2. The assembly of claim 1, wherein the component (104) comprises a metallic or a metal component (104).

3. The assembly of claim 1 or 2, wherein the component (104) is positioned on an aircraft and the component (104) comprises aluminum and/or titanium and/or steel and/or nickel.

4. The assembly of any preceding claim, wherein the component (104) is an intact unit, a partially intact unit, or a mock unit.

5. The assembly of any preceding claim, wherein the computed tomography scanner (102, 106) is a micro-computed tomography scanner (102, 106).

6. The assembly of any preceding claim, wherein the computed tomography scanner (102, 106) is configured to measure a wall thickness at each corrosion site with an accuracy of about 0.001 inches (0.0254 mm).

7. A method for non-destructively determining component life or probability of failure comprising:
positioning a computed tomography scanner (102, 106) relative to a component (104);
scanning a section (200) of the component (104) via the computed tomography scanner (102, 106) to identify corrosion sites and to measure one or more spatially resolved characteristic parameters for the corrosion sites to provide a first corrosion data set;
selecting a first subset of the first corrosion data set; and
performing an analysis on the first subset of the first corrosion data set to determine the component life or the probability of failure.

8. The method of claim 7, wherein the computed tomography scanner (102, 106) only scans one section (200) of the component (104) to identify corrosion sites and measures one or more spatially resolved characteristic parameters for the corrosion sites.

9. The method of claim 7, wherein the computed tomography scanner (102, 106) is configured to scan a plurality of zones of the section (200) of the component (104) to identify corrosion sites and measures one or more spatially resolved characteristic parameters for the corrosion sites, each zone of the plurality of zones having equal areas.

10. The method of any of claims 7 to 9, wherein:
the computed tomography scanner (102, 106) is configured to measure a wall thickness at each corrosion site with an accuracy of about 0.001 inches (0.0254 mm); and/or
the analysis comprises modeling the probability of failure of the component (104) and estimating the remaining life of the component (104).

11. The method of any of claims 7 to 10, wherein:
to measure one or more spatially resolved characteristic parameters for the corrosion sites comprises measuring the depth of each identified corrosion site, wherein the depth of each identified corrosion site is determined by its orientation towards a plane, where the plane determines perforation under pressure; and/or
to measure one or more spatially resolved characteristic parameters for the corrosion sites comprises measuring the remaining wall thickness at each identified corrosion site.

12. The method of any of claims 7 to 11, wherein the scanning provides a three-dimensional volume image as the first corrosion data set, the selecting of the first subset of the first corrosion data set comprises virtually positioning the three-dimensional volume image into zones with equal surface areas to provide sampling areas, a most severe corrosion site within each sampling area is selected to provide a subset of the most severe corrosion sites within the three-dimensional volume image, the subset of the most severe corrosion sites is the first subset of the first corrosion data set, and the first subset of the first corrosion data set is analyzed with extreme value statistics.

13. The method of any of claims 7 to 12, wherein the analysis on the first subset of the first corrosion data set is performed with a mechanistic model and/or a statistical model and/or a machine-learning model.

14. A method for non-destructive testing and measurement of corrosion sites on a component (104) comprising:
supplying a component (104), wherein the component (104) is corroded with a plurality of corrosion sites;
performing a first scan of the component (104), wherein the first scan comprises:
imaging a portion of the component (104) non-destructively;
measuring one or more spatially resolved characteristic parameters for the corrosion sites to provide a first corrosion data set;
selecting a first subset of the first corrosion data set corresponding to a subset of the corrosion sites; and
performing an analysis on the first subset of the first corrosion data set;
exposing the component (104) to corrosive conditions to provide a re-exposed component (104) and performing an additional scan of the re-exposed component (104), wherein the additional scan comprises:
imaging a portion of the re-exposed component (104) non-destructively;
measuring one or more spatially resolved characteristic parameters of the corrosion sites for the subset of corrosion sites to provide a second corrosion data set; and
performing an analysis on the second corrosion data set, optionally wherein the component (104) is re-exposed to corrosive conditions for n additional scans of the component (104) and generating n corrosion data sets for n sets of spatially resolved characteristic parameters for the corrosion sites, where n is an integer.

15. The method of claim 14, wherein:
the component (104) is exposed to corrosive conditions and an additional scan of the component (104) is performed for up to 100 additional scans; and/or
the corrosive conditions comprise conditions of use.
